# EUROPÄISCHE PATENTANMELDUNG

(11) **EP 0 844 122 A2**
(43) Veröffentlichungstag der Anmeldung: **27.05.1998**
(21) Anmeldenummer: 97119228.1
(22) Anmeldetag: 04.11.1997
(51) Int. Cl.: B60J 3/02

(54) **Lagerachse**

(30) Priorität: 20.11.1996 DE 19647918
(71) Anmelder: BECKER GROUP EUROPE GmbH, 42285 Wuppertal (DE)
(72) Erfinder: Viertel, Lothar, 66802 Altforweiler (DE); Welter, Patrick, 57730 La Chambre (FR)

(57) **Zusammenfassung**

Beschrieben wird eine L-förmige Lagerachse (1), die insbesondere für eine, eine Beleuchtungseinrichtung aufweisende Sonnenblende 2 bestimmt ist und mit elektrischen Verbindungsleitern bestückt ist. Bei dieser Lagerachse (1) ist vorgesehen, daß die elektrischen Verbindungsleiter aus Kontaktbändern (16, 21) bestehen, die in nutartigen Vertiefungen (19) der Lagerachse (1) aufgenommen sind, einendig den kurzen Achsschenkel (7) am freien Ende überragen und anderendig den langen Achsschenkel (6) vor dessen freien Ende mit angebildeten Kontaktsegmenten (23, 26) umschlingen.

## Beschreibung

Die Erfindung bezieht sich auf eine Lagerachse mit L-förmiger Gestaltung, insbesondere für eine, eine Beleuchtungseinrichtung aufweisende Fahrzeugsonnenblende, deren einer, kurzer Achsschenkel in einem an einer Fahrzeugkarosserie zu befestigenden Lagerböckchen und deren anderer, die Klappachse für den Sonnenblendenkörper bildender langer Achsschenkel in einem im Sonnenblendenkörper angeordneten Lagergehäuse drehbar gelagert ist und die im wesentlichen aus Kunststoff besteht und mit elektrischen Verbindungsleitern zur Herstellung einer elektrischen Verbindung zwischen dem Stromversorgungsnetz eines Fahrzeugs und der Beleuchtungseinrichtung der Fahrzeugsonnenblende ausgestattet ist.

Eine durch die DE 29 32 302 A1 bekanntgewordene Lagerachse aus Kunststoff weist eine sich durch den langen Achsschenkel und eine sich durch den kurzen Achsschenkel erstreckende Bohrung auf. Durch die Bohrungen sind Kabel als elektrische Verbindungsleiter geführt. Im Knie der Lagerachse befindet sich ein die Bohrungen miteinander verbindender, nach außen offener Freiraum, der das Einführen der Kabel erleichtern soll, dabei jedoch das Aussehen und die Stabilität der Lagerachse negativ beeinflußt.

Bei einer anderen, durch die DE 39 32 808 A1 bekanntgewordenen Lagerachse aus Kunststoff befindet sich innerhalb der Lagerachse eine darin durch Umspritzen eingelagerte Leiterplatte mit elektrisch leitfähigen Bahnen.

Bei einer noch anderen, durch die DE 39 16 560 A1 bekanntgewordenen Lagerachse ist für die Herstellung derselben ein zweiteiliger Aufbau, bestehend aus einem inneren Einleger und einem äußeren Ergänzungskörper vorgesehen, wobei sich zwischen dem Einleger und dem Ergänzungskörper zwei isolierte elektrische Leiter erstrecken.

Die bekannten Lagerachsen sind relativ aufwendig in der Herstellung und nicht unbedingt funktionssicher.

Der Erfindung liegt hiernach die Aufgabe zugrunde, eine Lagerachse der eingangs genannten Art zu schaffen, die kostengünstig und dennoch funktionssicher ist.

Diese Aufgabe löst eine Lagerachse erfindungsgemäß mit den Merkmalen des Anspruchs 1.

Die erfindungsgemäße Lagerachse ist rationeller, wirtschaftlicher und kostengünstiger als die bekannten Vorbilder herzustellen und ist gegenüber diesen auch qualitativ verbessert.

Vorteilhafte Ausgestaltungen und Weiterbildungen der erfindungsgemäßen Lagerachse sind Gegenstand der Unteransprüche.

Ein Ausführungsbeispiel der Erfindung wird im folgenden anhand der Zeichnungen näher erläutert, und es zeigen:
- Fig. 1: eine mit der neuen Lagerachse bestückte Sonnenblende,
- Fig. 2: eine Lagerachse ohne elektrische Verbindungsleiter,
- Fig. 3: die von einem Lagerböckchen aufgenommene neue Lagerachse,
- Fig. 4: ein erstes Kontaktband,
- Fig. 5: ein zweites Kontaktband,
- Fig. 6: die mit Kontaktbändern bestückte Lagerachse,
- Fig. 7: einen Schnitt A - A nach Fig. 2,
- Fig. 8: einen Schnitt B - B nach Fig. 2,
- Fig. 9: einen Schnitt C - C nach Fig. 6,
- Fig. 10: einen Schnitt D - D nach Fig. 2,
- Fig. 11: einen Schnitt E - E nach Fig. 6,
- Fig. 12: einen Schnitt F - F nach Fig. 2 und
- Fig. 13: einen Schnitt G - G nach Fig. 6.

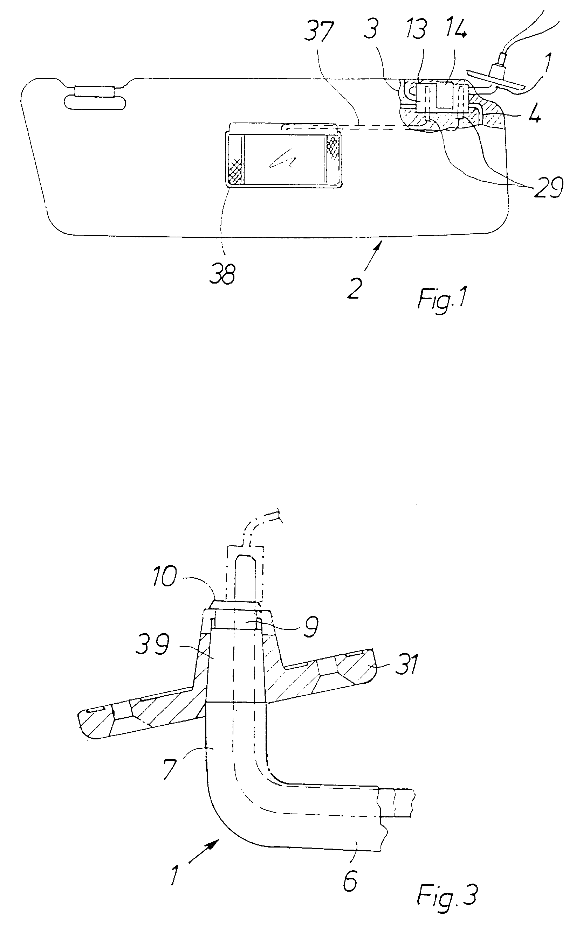

Die neue Lagerachse 1 ist maßlich und in ihrer Gestaltung auf die Gegebenheiten der Sonnenblende 2 entsprechend Fig. 1 und deren Verstärkungseinlage 4 abgestimmt. Für das Achsmaterial werden bevorzugt mineralverstärkte Kunststofftypen eingesetzt, um die Festigkeitseigenschaften zu erhöhen. Es besteht dennoch der Vorteil, daß eine farbliche Abstimmung mit dem Umhüllungsmaterial 3 der Sonnenblende 2 erfolgen kann.

Die Lagerachse 1 hat einen im wesentlichen runden Querschnitt und besteht aus einem langen Achsschenkel 6 und einem kurzen Achsschenkel 7, die in einem bestimmten Winkel zueinander stehen und über einen Radius miteinander zur L-Form verbunden sind. Der Achsschenkel 7 hat einen angebildeten, ermittelten und bewährten Konus 39, endseitig einen abgesetzten Zylinderteil 9 an dessen Ende ein Pilzkopf 10 sitzt. Der einen Hinterschnitt bildende Pilzkopf 10 dient dazu, daß nach der Montage in das entsprechend ausgebildete Aufnahmeloch im Lagerbock 31 eine Verriegelung gebildet wird. Der lange Achsschenkel 6 weist endseitig einen abgesetzten Zylinderteil 40 mit angebildetem Pilzkopf 12 auf, der eine axiale Abzugsicherung im Lager 13 der Sonnenblende 2 bewirkt. Zwecks besserer Einführbarkeit in das Lager 13 mit darin angeordneter Rastfeder 14, hat der lange Achsschenkel 6 endseitig Abschrägungen 15. Örtlich ist eine Abflachung 18 vorgesehen, maßlich abgestimmt mit der Rastfeder 14 und einer am Kontaktband 16 örtlich angebildeten Materialverbreiterung 17, wobei die Schräglage der Abflachung 18 wiederum mit dem Anlagewinkel der Sonnenblende 2 am Dachhimmel zu ermitteln und festzulegen ist. Über den kurzen Achsschenkel 7 und den langen Achsschenkel 6 erstrecken sich zwei nutartig ausgebildete Vertiefungen 19, die sich unterschiedlich lang im Achsschenkel 6 erstrecken und jeweils in angebildete vertiefte Freibereiche 20 übergehen.

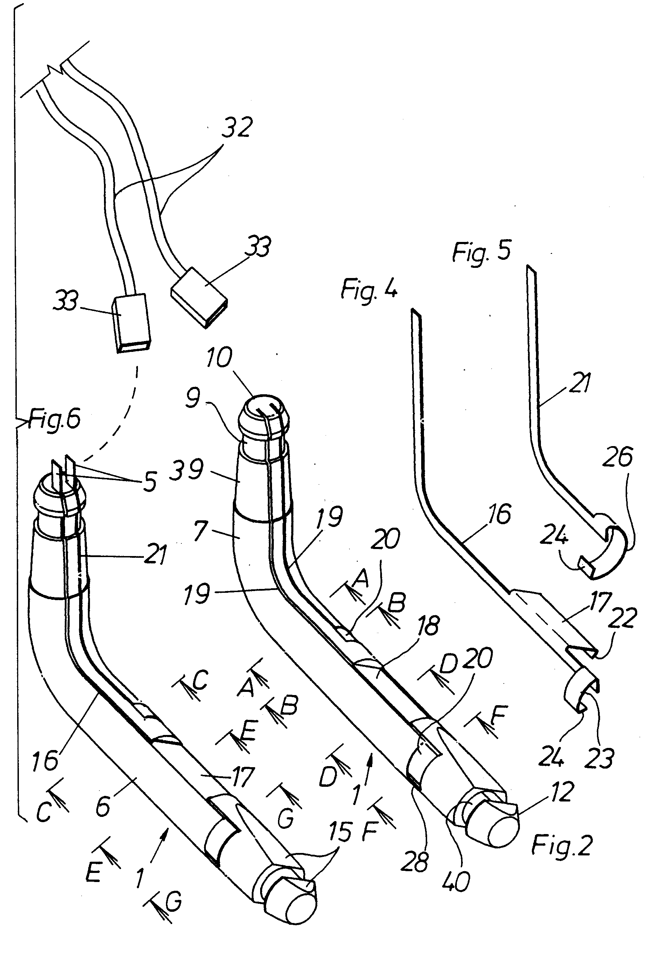

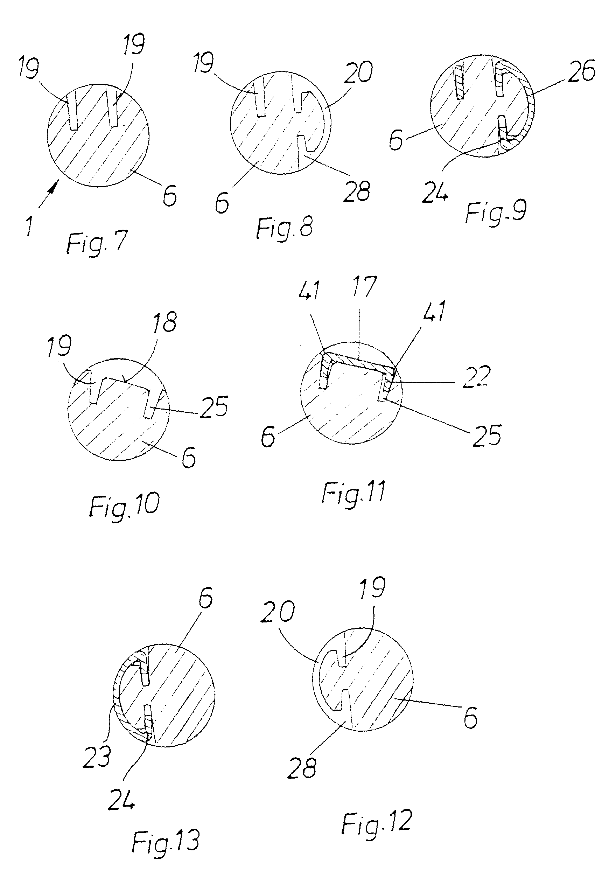

Die Kontaktbänder 16 und 21 sind aus leitendem Nichteisenmetall, formgestanzt und geprägt und maßlich mit den Gegebenheiten und somit der Achsausbildung abgestimmt. Das Kontaktband 16 hat örtlich eine, eine Rastfläche bildende Materialverbreiterung 17 mit einer Abkantung 22. Einendig ist am Kontaktband 16 ein Kontaktsegment 23 halbkreisförmig mit einer zusätzlichen Abkantung 24 angeprägt. Das kürzere Kontaktband 21 (Fig. 5) weist einendig ebenfalls ein Kontaktsegment 26 auf, das halbkreisförmig und mit einer Abkantung 24 versehen ausgebildet ist. Die Montage der Kontaktbänder 16 und 21 kann bevorzugterweise maschinell durchgeführt werden. die Kontaktbänder 16 und 21 werden dazu den nutartigen Vertiefungen 19 zugeführt und in diese eingedrückt bzw. eingepreßt. Die kreisförmigen Kontaktsegmente 23, 26 mit ihren Abkantungen 24 sind dabei zunächst maulartig aufgespreizt. Ihre Plazierung in den Freibereichen 20 erfolgt mit einem Formwerkzeug. Durch die radienförmige Anbildung der Kontaktsegmente 23 und 26 entsteht ein annähernd geschlossener Kreis (Fig. 9 und 13). Die die Rastfläche für die Rastfeder 14 bildende Materialverbreiterung 17 des Kontaktbands 16 findet automatisch ihre Position in der Abflachung 18 des Achsschenkels 6, wobei die Abkantung 22 in die dafür vorgesehene Nut 25 eingreift. Die Abkantungen 24 finden eine Verankerung in nutartigen Vertiefungen oder Aufnahmen 28.

Bezüglich der integrierten Rastflächenanbildung gemäß Materialverbreiterung 17 sind Vorteile abzuleiten in der Art, daß man durch die Wahl von größeren Eckradien 41 eine weichere, sanftere Rastung der Sonnenblende 2 in die Dachmulde erreicht, was bei Kunststoffachsen sehr schwer zu realisieren wäre. Des weiteren kaschiert die Rastflächenanbildung Trenngratbildungen, die bei Kunststoffachsen aus werkzeug-/entformungstechnischen Gründen entstehen, was wiederum zu Qualitätsproblemen führt. Ebenso ist zu erwähnen, daß die Kanten bei Kunststoffrastflächen einer Abnutzung/Abrieb unterliegen, insbesondere festzustellen nach Dauerzyklustest, was wiederum für die angebildete metallische Rastfläche spricht.

Nachdem die Kontaktbänder 16, 21 in die Lagerachse 1 montiert wurden, wird der Lagerbock 31 auf den kurzen Achsschenkel 7 montiert. Danach erfolgt die Montage der Kabelverbindung 32 mit den integrierten Steckhülsen 33 an die am Achsende austretenden Enden 5 der Kontaktbänder 16, 21. Denkbar ist auch eine Anbindung mittels Punktverschweißung.

Das komplette Aggregat Lagerachse/Böckchen kann ohne großen Montageaufwand in die Sonnenblende 2 eingedrückt werden, wobei sich eine automatisierte Montage anbietet. Ebenso einfach ist es eine Demontage durchzuführen. Die Kontaktierung erfolgt über die Kabelanbindung 32, den an den Kontaktbändern 16, 21 angeformten Kontaktsegmenten 23, 26 der Lagerachse 1 sowie über die im Blendenlager 13 integrierten Kontakte 29, die mit entsprechenden Kabelanbindungen 37 innerhalb der Sonnenblende 2 zum z. B. beleuchteten Make-up Spiegel 38 geführt sind.

## Patentansprüche

1. Lagerachse (1) mit L-förmiger Gestaltung, insbesondere für eine, eine Beleuchtungseinrichtung aufweisende Fahrzeugsonnenblende (2), deren einer, kurzer Achsschenkel (7) in einem an einer Fahrzeugkarosserie zu befestigenden Lagerböckchen (31) und deren andere, die Klappachse für den Sonnenblendenkörper bildender langer Achsschenkel (6) in einem im Sonnenblendenkörper angeordneten Lagergehäuse (13) drehbar gelagert ist und die im wesentlichen aus Kunststoff besteht und mit elektrischen Verbindungsleitern zur Herstellung einer elektrischen Verbindung zwischen dem Stromversorgungsnetz eines Fahrzeugs und der Beleuchtungseinrichtung der Fahrzeugsonnenblende (2) ausgestattet ist, dadurch gekennzeichnet, daß die elektrischen Verbindungsleiter aus Kontaktbändern (16, 21) bestehen, die in nutartigen Vertiefungen (19) der Lagerachse (1) aufgenommen sind, einendig den kurzen Achsschenkel (7) am freien Ende überragen und anderendig den langen Achsschenkel (6) vor dessen freien Ende mit angebildeten Kontaktsegmenten (23, 26) umschlingen.

2. Lagerachse nach Anspruch 1, dadurch gekennzeichnet, daß die Kontaktbänder (16, 21) hochkant in den nutartigen Vertiefungen (19) angeordnet sind und bündig mit dem Außenmantel der Achsschenkel (6, 7) abschließen.

3. Lagerachse nach Anspruch 1 oder 2, dadurch gekennzeichnet, daß der lange Achsschenkel (6) Freibereiche (20) zur formschlüssigen Aufnahme der Kontaktsegmente (23, 26) aufweist.

4. Lagerachse nach wenigstens einem der Ansprüche 1 bis 3, dadurch gekennzeichnet, daß sich an jedem Freibereich (20) eine nutartige Vertiefung (28) zur Befestigungsaufnahme einer an jedem Kontaktsegment (23, 26) angeformten Abwinklung (24) anschließt.

5. Lagerachse nach wenigstens einem der Ansprüche 1 bis 4, dadurch gekennzeichnet, daß die nutartigen Vertiefungen (19) sich mit geringem Abstand parallel zueinander verlaufend über die Achsschenkel (6, 7) erstrecken und daß die Freibereiche (20) für die Aufnahme der Kontaktsegmente (23, 26) mit axialem Abstand nebeneinander am langen Achsschenkel (6) ausgebildet sind.

6. Lagerachse nach wenigstens einem der Ansprüche 1 bis 5, dadurch gekennzeichnet, daß an einem der Kontaktbänder eine sich auf einer Abflachung (18) des langen Achsschenkels (6) abstützenden Materialverbreiterung (17) als Rastflächenanbindung vorgesehen ist mit einer in eine Nut (25) des langen Achsschenkels (6) eingreifenden Abkantung (22).

7. Lagerachse nach wenigstens einem der Ansprüche 1 bis 6, dadurch gekennzeichnet, daß die Kontaktbänder (16, 21) aus Blechstanzteilen geformt sind und aus Kupfer, Messing oder dgl. bestehen.

8. Lagerachse nach wenigstens einem der Ansprüche 1 bis 7, dadurch gekennzeichnet, daß die Kontaktbänder (16, 21) entsprechend der Lagerachse (1) L-förmig ausgebildet sind.
